# NEW EUROPEAN PATENT SPECIFICATION

(11) **EP 0 143 643 B2**
(45) Date of publication and mention of the opposition decision: **15.11.1995**
(45) Mention of the grant of the patent: 13.01.1988
(21) Application number: 84308220.7
(22) Date of filing: 27.11.1984
(51) Int. Cl.: C08B 31/00

(54) **Production of a cross-bonded starch**
Herstellung vernetzter Stärke
Préparation d'amidon réticulé

(30) Priority: 28.11.1983 GB 8331712
(43) Date of publication of application: 05.06.1985
(73) Proprietor: CPC INTERNATIONAL INC., Englewood Cliffs New Jersey 07632-9976 (US)
(72) Inventor: Fitton, Michael George, B-1060 Brussels (BE); Gonze, Michel, B-1020 Brussels (BE)
(74) Representative: Wilkinson, Stephen John

(56) References cited:
- US-A- 2 989 521
- US-A- 3 557 091
- US-A- 4 207 355
- Code of Federal Regulations: Food and Drugs, 21.04.81, Part 172.982
- STARCH: Chemistry and Technology, ed. Whistler, R.L. and Paschall, E.F., Vol. II, Academic Press, 1967, page 371
- Stärke, Vol. 32 (1980) No. 3, pages 83-90

## Description

The present invention relates to a method of production of a cross-bonded starch using an aliphatic dibasic acid, in particular, adipic acid as the cross-bonding agent.

Cross-bonded starch in which the starch has been reacted with adipic acid and acetic anhydride to provide adipyl groups as the cross-bonding agent is known as acetylated di-starch adipate and is used as a thickener in food compositions. The conventional method of producing the product involves the reaction of the starch with a mixture of adipic acid and acetic anhydride in an aqueous reaction medium followed by washing and drying the product. These crossbonded products have the necessary resistance to heat, acid and/or shear conditions which may be encountered in processing or application of the starch containing food. The extent of cross-bonding, and hence the performance of the product is dependent, all other factors being equal, on the amount of adipic acid used in the reaction but the amount of the latter which may be employed is strictly controlled by current food regulations. Any technique, therefore, which can increase the cross-bonding effect of a given amount of adipic acid is commercially advantageous. We have now found that a pretreatment of the starch with hydrogen peroxide before reaction with the acetic anhydride/adipic acid mixture unexpectedly increases the apparent cross-bonding effect of a given quantity of adipic acid.

The use of hydrogen peroxide in the treatment of starch is well known as a bleaching or oxidising agent and for this use it is sanctioned by the food regulations. It has also been proposed in U.S. Patent 3 557 091 as an additive in the production of acetylated starch where low levels of hydrogen peroxide with ferrous salts are said to lower the swelling temperature of the product without causing significant degradation of the starch polymer.

Another use of hydrogen peroxide in starch technology is said to be the stabilisation of a starch paste on a storage (U.S. Patent 3 356 531) the amount of hydrogen peroxide used being 0.45% based on the starch.

Hydrogen peroxide has also been recommended in U.S. Patent 3 655 644 as a thinning agent for starch derivatives, for example, in a process in which starch is reacted with ethylene oxide to give hydroxy ethyl starch or with acetic anhydride to give acetylated starch. The starch is treated either before or after the reaction with hydrogen peroxide and a copper salt, any residual hydrogen peroxide being removed by treatment with a reducing agent. The aim of this process is to produce starch derivatives of high fluidity.

Accordingly, the present invention is a process for cross-bonding starch by reacting the starch with a mixture of acetic anhydride and adipic acid, in which prior to the reaction, the starch is treated with hydrogen peroxide.

Any starch may be used in the production of the cross-bonded product tuber or grain starches e.g. maize, waxy maize, potato or wheat starches being widely used. Waxy maize starch is particularly preferred. The amount of hydrogen peroxide used is at least 0.03% preferably up to 0.45% based on the dry starch weight, more preferably 0.03 to 0.3%. The treatment of the starch with the hydrogen peroxide is suitably carried out at a temperature in the range 0° to 60°C, particularly 20° to 50°C, the starch being in the form of an aqueous slurry and the hydrogen peroxide in aqueous solution e.g. a 30% aqueous solution. The reaction need not be prolonged as it takes place very rapidly in a matter of a few minutes.

Following the treatment with hydrogen peroxide, the reaction with adipic acid and acetic anhydride may be carried out directly. The pH of the starch slurry is first preferably adjusted so that it lies in the range 6 to 10 conveniently by the addition of an alkali e.g. sodium hydroxide solution. The amount of adipic acid is generally up to 0.12% of the starch dry weight and the acetic anhydride up to 10%, preferably 3% to 7.5%, again based on the starch dry weight. The reaction is carried out at a temperature which may lie in the range 20° to 60°C and throughout the reaction the pH is maintained in the range 7 to 9, preferably 8 to 8.5 by the addition of an alkali such as sodium hydroxide.

The reaction time is usually 0.5 to 2 hours, particularly 0.5 to 1 hour and at the end of the reaction, the pH of the slurry is reduced to about 5.5 by the addition of an acid e.g. hydrochloric acid and the solid product separated from the liquid e.g. by centrifuging and finally washed and dried.

Local food laws may prescribe different permissible amounts of bound adipyl groups based on the starch and, for acetylated distarch adipate produced in Holland, the figure is 900 ppm based on starch dry weight. As may be seen from the following Examples, particularly Examples 6 and 7, a product prepared according to the process of the present invention and containing 512 ppm adipyl groups, shows equivalent if not better properties than one prepared in the conventional manner and containing 1993 ppm adipyl groups. The properties in question are shear stability, acid stability and heat stability which are all improved by increased cross-bonding.

The adipyl contents of the acetylated di-starch adipates were determined by the method described by G. A. Mitchell et al. (Journal of the Association of Official Analytical Chemists *65* No. 2 1982). The other properties were determined as follows:

### Heat stability

Viscosity ratio of a 5% starch paste after heating for 30 minutes at 121°C to the original viscosity.

### Shear stability

Ratio of the viscosity after shearing a 4% d.s. starch paste at 4000 r.p.m./5 minutes at 80°C to the original viscosity.

### Acid stability

Ratio of the viscosity of starch paste (5% d.s.) after adjustment of pH to 2.5 with Citric Acid to original viscosity.

### Method of preparation of the cross-bonded starch

A slurry of starch at 20―22 Be was treated at 20―40°C with varying amounts of hydrogen peroxide as a 30% aqueous solution. The pH of the slurry was then adjusted to 8.0 to 8.5 by the addition of sodium hydroxide and a mixture of adipic acid and acetic anhydride added. The reaction was allowed to proceed at the same temperature for a period of 45 minutes to 1 hour with the continuous addition of sodium hydroxide to maintain the pH at 8.0 to 8.5. At the end of the reaction, the slurry pH was adjusted to 5.5 by addition of hydrochloric acid, the product separated by centrifuging, washed and flashed dried.

The shear stability (400 rpm for 5 minutes), acid stability (pH 2.5) and temperature stability (120°C for 30 minutes) were then measured. The results were as follows:

| Example 1 | Hydrogen peroxide | Adipic acid | Acetic anhydride | Shear stability | Acid stability | Heat stability |
|---|---|---|---|---|---|---|
| a | 0 | 0.2% | 7.5% | 0.95 | 1.0 | 1.05 |
| b | 1500 ppm | 0.2% | 7.5% | 7.0 | 1.96 | 1.70 |

| Example 2 | | | | | | |
|---|---|---|---|---|---|---|
| a | 0 | 0.2% | 7.5% | 0.95 | 1.0 | 1.05 |
| b | 500 ppm | 0.12% | 7.5% | 0.96 | 0.91 | 0.94 |
| c | 1000 ppm | 0.12% | 7.5% | 1.2 | 1.26 | 1.20 |

Example 1 demonstrates the improvement obtained with hydrogen peroxide treatment, all other factors being equal.

Example 2 shows that by using hydrogen peroxide treatment, equivalent or improved performance is obtained using less adipic acid.

In a further pair of examples the adipyl contents of the starch products were determined for a product prepared according to the invention and one prepared according to conventional practice but from an increased amount of adipic acid. The critical properties of the products were as follows:

| Example 3 | Pretreatment with hydrogen peroxide | Adipyl content | Shear stability | Acid stability | Heat stability |
|---|---|---|---|---|---|
| a | None | 1993 | 7 | 1.66 | 1.55 |
| b | 1500 ppm | 512 | 7 | 1.96 | 1.70 |

Example 3 shows that hydrogen peroxide pretreatment provides a product which has equivalent properties to one which contains almost four times the amount of adipyl groups but which has not been subjected to the pretreatment.

Example 4 repeated the conditions of Example 1 but used an increased amount of hydrogen peroxide in comparison with an identical experiment in which no hydrogen peroxide was used. The following results emphasise the beneficial effect of hydrogen peroxide treatment:

| Hydrogen peroxide | Adipic acid % | Acetic anhydride % | Shear stability | Acid stability | Heat stability |
|---|---|---|---|---|---|
| (a) 0 | 0.12 | 7.5 | 0.8 | 0.7 | 0.85 |
| (b) 3000 ppm | 0.12 | 7.5 | 3.4 | 1.4 | 3.3 |

## Claims

1. A process for cross-bonding starch by reacting the starch with a mixture of acetic anhydride and adipic acid in which prior to the reaction, the starch is treated for a few minutes with at least 0.03% hydrogen peroxide based on the dry starch weight.

2. A process according to Claim 1 in which the amount of hydrogen peroxide used is up to 0.45% based on the dry starch weight.

3. A process according to Claim 1 or Claim 2 in which the starch is treated with the hydrogen peroxide at a temperature in the range 0° to 60°C.

4. A process according to any one of the preceding claims in which the starch is reacted with the acetic anhydride and adipic acid at a pH in the range 6 to 10.

5. A process according to any one of the preceding claims in which the amount of adipic acid is up to 0.12% based on the starch dry weight.

6. A process according to any one of the preceding claims in which the amount of acetic anhydride is up to 10% based on the starch dry weight.

7. A process according to any one of the preceding claims in which the starch is reacted with the acetic anhydride and adipic acid at a temperature in the range 20° to 60°C.

## Patentansprüche

1. Ein Verfahren zur Vernetzung von Stärke durch Reaktion der Stärke mit einer Mischung von Acetanhydrid und Adipinsäure, bei welchem vor der Reaktion die Stärke für wenige Minuten mit mindestens 0.03% Wasserstoffperoxid auf Basis des trockenen Stärkegewichts behandelt wird.

2. Ein Verfahren nach Anspruch 1, in dem die verwendete Menge Wasserstoffperoxid bis zu 0.45% auf Basis des trockenen Stärkegewichts beträgt.

3. Ein Verfahren nach Anspruch 1 oder Anspruch 2, in dem die Stärke mit Wasserstoffperoxid bei einer Temperatur im Bereich von 0° bis 60°C behandelt wird.

4. Ein Verfahren nach einem der vorhergehenden Ansprüche, in dem die Stärke mit Acetanhydrid und Adipinsäure bei einem pH im Bereich von 6 bis 10 umgesetzt wird.

5. Ein Verfahren nach einem der vorhergehenden Ansprüche, in dem die Menge Adipinsäure bis zu 0.12% auf Basis des Stärketrockengewichts beträgt.

6. Ein Verfahren nach einem der vorhergehenden Ansprüche, in dem die Menge Acetanhydrid bis zu 10% auf Basis des Stärketrockengewichts beträgt.

7. Ein Verfahren nach einem der vorhergehenden Ansprüche, in dem die Stärke mit Acetanhydrid und Adipinsäure bei einer Temperatur im Bereich von 20° bis 60°C umgesetzt wird.

## Revendications

1. Procédé de réticulation d'amidon par réaction d'amidon avec un mélange d'anhydride acétique et d'acide adipique, dans lequel, avant la réaction, l'amidon est traité pendant quelques minutes avec au moins 0,03 % de peroxyde d'hydrogène, sur la base du poids sec d'amidon.

2. Procédé suivant la revendication 1, dans lequel la quantité de peroxyde d'hydrogène utilisée s'élève à 0,45% sur la base du poids sec d'amidon.

3. Procédé suivant la revendication 1 ou la revendication 2, dans lequel l'amidon est traité avec le peroxyde d'hydrogène à une température comprise dans l'intervalle de 0 à 60°C.

4. Procédé suivant l'une quelconque des revendications précédentes, dans lequel l'amidon est amené à réagir avec l'anhydride acétique et l'acide adipique à un pH compris dans l'intervalle de 6 à 10.

5. Procédé suivant l'une quelconque des revendications précédentes, dans lequel la quantité d'acide adipique s'élève à 0,12% sur la base du poids sec d'amidon.

6. Procédé suivant l'une quelconque des revendications précédentes, dans lequel la quantité d'anhydride acétique s'élève à 10% sur la base du poids sec d'amidon.

7. Procédé suivant l'une quelconque des revendications précédentes, dans lequel l'amidon est amené à réagir avec l'anhydride acétique et l'acide adipique à une température comprise dans l'intervalle de 20 à 60°C.
